# FASCICULE DE BREVET EUROPEEN

(11) **EP 0 721 402 B1**
(45) Date de publication et mention de la délivrance du brevet: **16.12.1998**
(21) Numéro de dépôt: 94927575.4
(22) Date de dépôt: 07.09.1994
(51) Int. Cl.: B60C 15/024, B60C 15/00

(54) **PNEUMATIQUE A ARMATURE DE CARCASSE RADIALE**
RADIALER LUFTREIFEN
PNEUMATIC RADIAL TYRE

(30) Priorité: 30.09.1993 FR 9311825
(43) Date de publication de la demande: 17.07.1996
(73) Titulaire: COMPAGNIE GENERALE DES ETABLISSEMENTS MICHELIN - MICHELIN & CIE, 63040 Clermont-Ferrand Cédex (FR)
(72) Inventeur: BILLIERES, Jean, F-63100 Clermont-Ferrand (FR)
(74) Mandataire: Devaux, Edmond-Yves
(86) Numéro de dépôt international: EP9402982
(87) Numéro de publication internationale: WO9509090

(56) Documents cités:
- EP-A- 0 077 161
- EP-A- 0 253 568
- EP-A- 0 358 490
- FR-A- 2 368 375

## Description

L'invention concerne un pneumatique à armature de carcasse radiale sans chambre à air indépendante et plus particulièrement destiné à l'équipement véhicules du type Poids Lourds tel que camions, autobus, métropolitains et ensembles tracteurs-remorques.

De tels pneumatiques sont montés sur deux types de jante : les jantes dites à base creuse, possédant des sièges tronconiques inclinés par rapport à l'axe de rotation et faisant avec ledit axe un angle pouvant varier de 5° à 15°, et les jantes à fond plat ou pratiquement plat, ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante est considéré par les utilisateurs comme trop petit et il ne permet pas de choisir des tambours de freins de dimensions adaptées à un freinage efficace d'un véhicule de plus en plus puissant.

Il est donc hautement souhaitable d'augmenter le diamètre de fond de jante, et dans toute la mesure du possible sans augmenter le diamètre hors tout de l'ensemble roulant, ce qui revient à abaisser le rapport de forme H/S du pneumatique, H étant la hauteur du pneumatique sur jante et S sa largeur axiale maximale.

Dans d'autres cas, il est avantageux de diminuer le diamètre hors tout de l'ensemble roulant formé par le pneumatique et la jante sans diminuer le diamètre de la jante, et en particulier dans le but d'abaisser le centre de gravité des remorques ou semi-remorques tractées. Un pneumatique dont le rapport de forme H/S diminue tout en conservant sensiblement la largeur axiale maximale normalisée, représente une solution pour le problème ci-dessus.

La mise au point de pneumatiques Poids Lourds avec des rapports de forme inférieurs à 0,8 est très délicate. En particulier, l'endurance des bourrelets devient nettement moindre au fur et à mesure que le rapport H/S diminue, les insuffisances de l'endurance se situant en particulier au niveau des extrémités de retournements de l'armature de carcasse ou des extrémités de nappes de renforcement localisées dans les bourrelets du pneumatique, l'architecture desdits bourrelets étant une architecture usuelle avec, dans chaque bourrelet, un retournement d'armature de carcasse et des nappes de renforcement dont les profils méridiens sont sensiblement parallèles au profil méridien de l'armature de carcasse dans la zone desdits bourrelets. En outre une telle architecture entraîne un manque de confort notable, ce qui est parfaitement insupportable pour de longs trajets sur des routes plus ou moins bosselées.

Le brevet EP 077161 décrit un pneumatique avec une armature de carcasse venant s'enrouler en allant de l'extérieur vers l'intérieur autour d'une tringle et d'un élément annulaire élastique en caoutchouc, placé axialement et radialement à l'intérieur de ladite tringle. Afin que le bourrelet, et plus particulièrement l'élément annulaire puisse permettre, par rotation autour de la tringle, la mise en tension de l'armature de carcasse, le siège de bourrelet est nettement plus incliné par rapport à une parallèle à l'axe de rotation que le siège de jante.

L'invention se propose de remédier à de tels inconvénients, et concerne un pneumatique de rapport de forme inférieur à 0,8 et ayant une armature de carcasse radiale surmontée radialement d'une armature de sommet, l'armature de carcasse étant composée d'au moins une nappe de fils ou câbles et étant enroulée dans chaque bourrelet autour d'une tringle d'ancrage en allant de l'extérieur à l'intérieur pour former un retournement, caractérisé en ce que ledit retournement est situé à l'intérieur d'un angle α, ouvert axialement vers l'intérieur et radialement vers l'extérieur d'au plus 45° et délimité par deux demi-droites OD₁ et OD₂ tangentes au cercle circonscrit à la tringle d'ancrage, la demi-droite la plus proche de l'axe de rotation étant parallèle audit axe.

Le profil méridien du retournement peut être rectiligne; il est préférentiellement courbe avec un seul rayon de courbure et un centre de courbure situé radialement à l'intérieur. De même, ce profil méridien, axialement au niveau de l'extrémité du retournement, sera tangent à une parallèle à l'axe de rotation.

Il est aussi avantageux que le retournement d'armature de carcasse soit renforcé par la présence d'une armature de renforcement additionnelle, formée d'au moins une nappe composée de fils ou câbles, métalliques ou textiles. Dans le cas d'une seule nappe, cette dernière peut être posée indifféremment radialement à l'extérieur ou à l'intérieur du retournement. Dans le cas de deux nappes de renforcement, elles seront préférentiellement disposées de part et d'autre du retournement. De manière avantageuse, lesdites nappes de renforcement seront composées de câbles métalliques, orientés par rapport à la direction circonférentielle d'un angle compris entre 0° et 30°, la valeur 0° étant incluse dans l'intervalle cité.

Il est de même avantageux de disposer axialement à l'extérieur de l'armature de carcasse, au niveau du rebord de jante, une armature de renforcement additionnelle, formée d'au moins une nappe de renforcement, composée de fils ou câbles, métalliques ou textiles et orientés par rapport à la direction circonférentielle d'un angle compris entre 0° et 30°.

S'il est usuel de comprendre que toute armature, et donc un retournement d'armature de carcasse ou une nappe de renforcement comprend non seulement les éléments de renforcement mais aussi le mélange vulcanisé de caoutchouc qui les entoure, appelé mélange de calandrage, la quantité de caoutchouc disposé sur et sous les fils ou câbles étant généralement de faible épaisseur, il est avantageux, dans le cadre de l'invention, que le retournement d'armature de carcasse et que l'armature de renforcement additionnelle soient disposés dans une même portion annulaire du pneumatique, portion qui fait protubérance par rapport au profil méridien usuel de l'intérieur du pneumatique, cette protubérance ayant une section présentant une dimension radiale, ou épaisseur, croissante axialement de l'intérieur à l'extérieur, en présentant son épaisseur la plus faible au niveau de l'extrémité du retournement d'armature de carcasse et son épaisseur la plus forte au niveau de la jonction avec le bourrelet

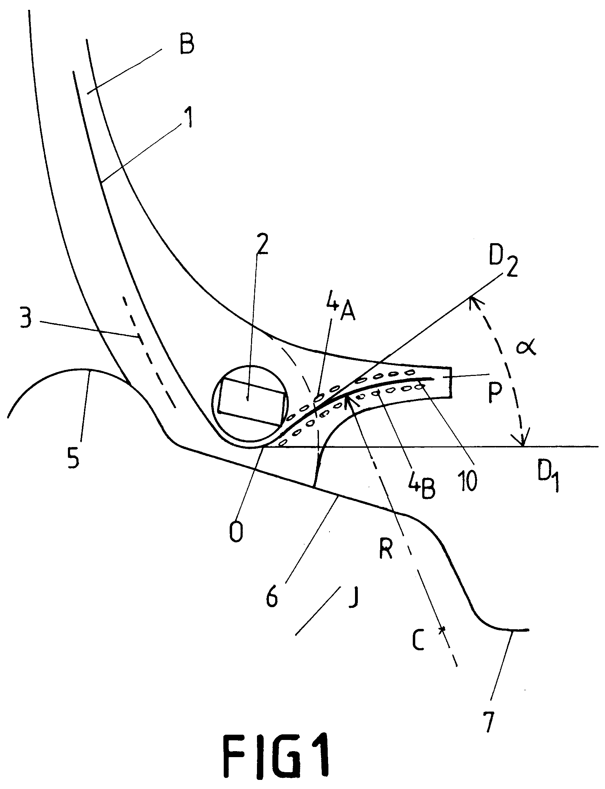

En se référant au dessin annexé, n'ayant qu'une seule figure, un exemple non limitatif de l'invention est décrit. Ladite figure est une vue schématique en section méridienne d'un bourrelet de pneumatique , monté sur son siège de jante.

Un pneumatique de dimension 295/60 R 22.5 X est monté sur sa jante de service J, formée de chaque côté d'un rebord de jante(5), prolongé axialement à l'intérieur d'un siège de jante (6), dont la génératrice tronconique fait avec une parallèle à l'axe de rotation un angle de 15°, les deux sièges de jante étant réunis à un fond de jante, présentant la gorge de montage (7). Sur chaque côté de la jante J, est monté un bourrelet B du pneumatique considéré. Dans ledit bourrelet, l'armature de carcasse (1), composée d'une seule nappe métallique, est retournée autour d'une tringle (2) à fils rectangulaires en allant de l'extérieur à l'intérieur pour former un retournement (10).

Ce retournement (10) a un profil méridien entièrement localisé entre les deux demi-droites OD₁ et OD₂, la demi-droite OD₁ étant parallèle à l'axe de rotation et formant avec la demidroite OD₂ un angle α ouvert vers l'intérieur égal à 40°, les demi-droites OD₁ et OD₂ étant tangentes au cercle circonscrit à la tringle (2).

Le profil méridien du retournement (10) est courbe avec un unique rayon de courbure R et un centre de courbure C situé radialement à l'intérieur. Ce profil méridien, au niveau de l'extrémité du retournement (10) est tangent à une parallèle à l'axe de rotation; en d'autres mots, la courbe représentant ledit profil méridien tend vers une asymptote parallèle à l'axe de rotation.

Respectivement sur et sous le retournement (10) est disposée une nappe (4A,4B) de câbles métalliques faisant avec la direction circonférentielle un angle nul. Quant à l'armature de carcasse (1), radialement au niveau du rebord de jante (5), elle est renforcée par la présence axialement à l'extérieur d'une nappe de renforcement (3) de câbles métalliques orientés par rapport à la direction circonférentielle d'un angle égal à 20°.

Le retournement (10) et les deux nappes (4A et 4B) sont disposés dans une protubérance caoutchouteuse P axialement à l'intérieur et dont la section méridienne présente une épaisseur faible axialement au niveau de l'extrémité du retournement (10) et qui croît de manière sensiblement uniforme vers la jonction (représentée en pointillés) avec le profil méridien intérieur du pneumatique.

Un pneumatique tel que décrit ci-dessus est avantageusement fabriqué par une méthode de fabrication telle que celle décrite dans la demande internationale publiée sous le n° WO95/00322.

## Revendications

1. Pneumatique, de rapport de forme inférieur à 0,8 et ayant une armature de carcasse radiale (1) surmontée radialement d'une armature de sommet, l'armature de carcasse (1) étant composée d'au moins une nappe de fils ou câbles et étant enroulée dans chaque bourrelet (B) autour d'une tringle d'ancrage (2) en allant de l'extérieur à l'intérieur pour former un retournement (10), caractérisé en ce que ledit retournement (10) est situé à l'intérieur d'un angle α, ouvert axialement vers l'intérieur et radialement vers l'extérieur d'au plus 45° et délimité par deux demi-droites OD₁ et OD₂ tangentes au cercle circonscrit (C) à la tringle d'ancrage (2), la demi-droite la plus proche de l'axe de rotation étant parallèle audit axe.

2. Pneumatique selon la revendication 1 caractérisé en ce que le profil méridien du retournement (10) est rectiligne.

3. Pneumatique selon la revendication 1, caractérisé en ce que le profil méridien du retournement (10) est courbe avec un rayon de courbure R unique et un centre de courbure C situé radialement à l'intérieur, ce profil devenant à l'extrémité du retournement (10) parallèle à l'axe de rotation.

4. Pneumatique selon l'une des revendications 1 à 3, caractérisé en ce que le retournement (10) est renforcé par la présence d'au moins une nappe de renforcement additionnelle (4A,4B) de câbles orientés, par rapport à la direction circonférentielle, d'un angle compris entre 0° et 30°.

5. Pneumatique selon la revendication 4, caractérisé en ce que le retournement (10) d'armature de carcasse (1) et la(les) nappe(s) de renforcement additionnelles (4A et 4B) sont disposées dans une même portion annulaire de caoutchouc qui fait protubérance par rapport au profil méridien de la cavité intérieure du pneumatique.

## Claims

1. A tyre, of a form ratio of less than 0.8 and having a radial carcass reinforcement (1) surmounted radially by a crown reinforcement, the carcass reinforcement (1) being formed of at least one ply of cords or cables and being wound in each bead (B) around an anchoring bead wire (2) going from the outside to the inside to form a turn-up (10), characterised in that said turn-up (10) is located to the inside of an angle α, open axially towards the inside and radially towards the outside, of at most 45°, defined by two half-lines OD₁ and OD₂ tangent to the circle (C) circumscribed on the anchoring bead wire (2), the half-line closest to the axis of rotation being parallel to said axis.

2. A tyre according to Claim 1, characterised in that the meridian profile of the turn-up (10) is rectilinear.

3. A tyre according to Claim 1, characterised in that the meridian profile of the turn-up (10) is curved with a single radius of curvature R and a centre of curvature C located radially towards the inside, said profile becoming parallel to the axis of rotation at the end of the turn-up (10).

4. A tyre according to one of Claims 1 to 3, characterised in that the turn-up (10) is reinforced by the presence of at least one additional reinforcement ply (4A, 4B) of cables, oriented relative to the circumferential direction by an angle of between 0° and 30°.

5. A tyre according to Claim 4, characterised in that the turn-up (10) of the carcass reinforcement (1) and the additional reinforcement ply/plies (4A and 4B) are arranged in one and the same annular rubber portion which protrudes with respect to the meridian profile of the inner cavity of the tyre.

## Patentansprüche

1. Reifen mit einem Formverhältnis kleiner als 0,8 und mit einer radialen Karkassenbewehrung (1), die radial von einer Scheitelbewehrung überdeckt ist, wobei die Karkassenbewehrung (1) aus mindestens einer Lage aus Fäden bzw. Drähten oder Seilen zusammengesetzt ist und in jedem Wulst (B) um einen verankerungs-Wulstkern (2) herumgeschlagen ist, wobei sie von außen nach innen verläuft, um einen Umschlag (10) zu bilden,
**dadurch gekennzeichnet, daß**
der genannte Umschlag (10) im Inneren eines Winkels α gelegen ist, der axial nach innen und radial nach außen um höchstens 45° geöffnet ist und durch zwei Strahlen OD1 und OD2 begrenzt ist, die Tangenten an den Kreis (C) sind, der dem verankerungs-Wulstkern (2) umschrieben ist, wobei der der Drehachse nächstgelegene Strahl parallel zur genannten Achse ist.

2. Reifen nach Anspruch 1, dadurch gekennzeichnet, daß das Meridianprofil des Umschlags (10) geradlinig ist.

3. Reifen nach Anspruch 1, dadurch gekennzeichnet, daß das Meridianprofil des Umschlags (10) mit einem einzigen Krümmungsradius und einer Krümmungsmitte (C) gekrümmt ist, die radial innen liegt, wobei dieses Pro-fil am Ende des Umschlags (10) parallel zur Drehachse wird.

4. Reifen nach einem der Ansprüche 1 bis 3, dadurch gekennzeichnet, daß der Umschlag (10) durch die Anwesenheit von mindestens einer zusätzlichen Verstärkungslage (4A, 4B) aus Seilen verstärkt ist, die in Bezug auf die Umfangsrichtung mit einem Winkel ausgerichtet sind, der zwischen 0° und 30° liegt.

5. Reifen nach Anspruch 4, dadurch gekennzeichnet, daß der Umschlag (10) der Karkassenbewehrung (1) und die zusätzliche(n) Verstärkungslage(n) (4A und 4B) im gleichen ringförmigen Gummiabschnitt angeordnet ist bzw. sind, der in Bezug auf das Meridianprofil des inneren Hohlraums des Reifens eine Ausstülpung bildet.
